(19) Europäisches Patentamt / European Patent Office / Office européen des brevets

(11) **EP 4 502 732 A1**

(12) **DEMANDE DE BREVET EUROPEEN**

(43) Date de publication:
**05.02.2025 Bulletin 2025/06**

(21) Numéro de dépôt: **23189164.9**

(22) Date de dépôt: **02.08.2023**

(51) Classification Internationale des Brevets (IPC):
**G03H 1/00** *(2006.01)*     **G03H 1/04** *(2006.01)*
**G03H 1/26** *(2006.01)*     **G01N 15/1433** *(2024.01)*
**G01N 15/1434** *(2024.01)*     **G01N 15/10** *(2024.01)*
**G03H 1/08** *(2006.01)*     G06T 7/00 *(2017.01)*
G06V 10/143 *(2022.01)*     G06V 10/22 *(2022.01)*
G06V 10/24 *(2022.01)*     G06V 10/26 *(2022.01)*
G06V 10/44 *(2022.01)*     C12Q 1/04 *(2006.01)*

(52) Classification Coopérative des Brevets (CPC):
**G03H 1/0486; G01N 15/1433; G01N 15/1434;
G03H 1/0005; G03H 1/0866; G06V 10/143;
G06V 20/695;** G01N 2015/1006; G01N 2015/144;
G01N 2015/1454; G03H 1/0443; G03H 2001/0038;
G03H 2001/005; G03H 2001/0447;
G03H 2001/0454;                    (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(71) Demandeurs:
• **BIOMÉRIEUX
69280 Marcy L'Etoile (FR)**
• **Bioaster
69007 Lyon (FR)**
• **Université Jean Monnet Saint-Étienne
42100 Saint-Étienne (FR)**
• **Centre National de la Recherche Scientifique
(CNRS)
75016 Paris (FR)**

(72) Inventeurs:
• **BRAULT, Dylan
37380 MONNAIE (FR)**
• **FOURNIER, Corinne
42000 SAINT ETIENNE (FR)**
• **OLIVIER, Thomas
42000 SAINT ETIENNE (FR)**
• **FAURE, Nicolas
38100 GRENOBLE (FR)**

(74) Mandataire: **bioMérieux PI Groupement
mandataires
bioMérieux
69280 Marcy l'Etoile (FR)**

(54) **PROCÉDÉ ET SYSTÈME DE CARACTÉRISATION DE MICROORGANISMES PAR MICROSCOPIE HOLOGRAPHIQUE NUMÉRIQUE**

(57)    Un procédé de caractérisation de microorganismes comprend

A. pour chaque longueur d'onde d'un ensemble prédéterminé de longueurs d'onde d'au moins une longueur d'onde, l'acquisition d'une image numérique holographique la génération informatique d'une image focalisée dont chaque pixel comprend une valeur d'amplitude et une valeur de phase, la segmentation de l'image focalisée de manière à extraire des portions correspondant à des microorganismes;
B. la caractérisation informatique des microorganismes en fonction desdites portions d'images focalisées,
    Selon l'invention, préalablement à la caractérisation ou préalablement à la segmentation ou préalablement à la génération de l'image focalisée, le procédé comporte la correction informatique d'aberrations optiques du dispositif d'acquisition et la caractérisation des microorganismes comporte l'application d'un modèle numérique auxdites portions ayant pour descripteurs les valeurs d'amplitude et/ou de phase de chaque longueur d'onde de l'ensemble prédéterminé de longueurs d'onde.

FIG 2

(52) Classification Coopérative des Brevets (CPC):
(Cont.)G03H 2001/266

**Description**

**DOMAINE TECHNIQUE**

La présente invention concerne le domaine du diagnostic in vitro, en particulier la caractérisation de micro-organismes, en particulier des bactéries, des levures et des champignons, au moyen de la microscopie holographique numérique en ligne.

L'invention trouve une application avantageuse dans la détermination du gram de bactérie, connaître leurs morphologies ou pour savoir l'état métabolique de microorganismes suite à l'application d'un agent antimicrobien.

**ART ANTERIEUR**

L'observation de microorganismes dans un échantillon biologique est usuellement réalisé au moyen d'une microscopie optique couleur au focus avec une source de lumière incohérente de type Köhler.

Toutefois, plusieurs difficultés se posent. Par exemple dans le cadre du diagnostic in vitro microbien, les objets à imager dans une surface d'intérêt sont typiquement de l'ordre du micromètre, ce qui nécessite une imagerie microscopique à fort grossissement et requiert une expertise importante tant pour la préparation de l'échantillon, l'acquisition des images (sélection de la zone d'intérêt, focalisation), que l'interprétation de l'image (reconnaissance des objets dans le contexte d'échantillon complexe décrit précédemment).

La microscopie holographique numérique ou DHM (Digital Holographie Microscopy) est une technique d'imagerie permettant de s'affranchir des contraintes de profondeur de champ de la microscopie optique classique en acquérant des images défocalisées. Schématiquement, elle consiste à enregistrer une figure d'interférence, usuellement appelé « hologramme », formée par l'interférence entre les ondes lumineuses diffractées par l'objet observé et une onde incidente de référence présentant une cohérence spatiale. La microscopie DHM permet une reconstruction informatique de la phase, ce que ne permet pas l'imagerie microscopique focalisée, ainsi que la reconstruction numérique d'une image des objets observés dans différents plans parallèles au plan du capteur d'image. En outre, l'acquisition d'image étant défocalisée, la microscopie DHM permet de s'affranchir de la nécessité d'utiliser une platine précise, et donc coûteuse, pour le déplacement de système optique et/ou de l'échantillon le long de l'axe optique.

Cette technique est décrite dans l'article de revue de Myung K.Kim intitulé « Principles and techniques of digital holographie microscopy» publié dans SPIE Reviews Vol. 1, N°1, Janvier 2010, l'article de N. Wu et al. intitulé « Three-dimensional identification of microorganisms using a digital holographie microscope» publié dans Computational and Mathematical Methods in Medicine, Vol. 2013 , art. N° ID 162105, l'article de Ahmed El Mallahi intitulé « Automated threedimensional détection and classification of living organisms using digital holography microscopy with partial spatial cohérent source: application to monitoring of drinkingwater resources » publié dans Applied Optics, Vol. 52 N° 1, Janvier 2013, les demande de brevet européen EP 3 252 455 et français FR 3 111 998. L'article de Soulez, F., Denis, L., Fournier, C., Thiébaut, É. & Goepfert, C. « Inverse-problem approach for particle digital holography: accurate location based on local optimization ». JOSA A 24, 1164-1171 (2007) et l'article de Soulez, F., Denis, L., Thiébaut, É., Fournier, C. & Goepfert, C. « Inverse problem approach in particle digital holography: out-of-field particle détection made possible ». JOSA A 24, 3708-3716 (2007) décrivent quant à eux la reconstruction 3D des objets observés ayant donnés lieu aux figures d'interférence.

Si la microscopie DHM, par son acquisition d'image défocalisées des microorganismes à observer et les capacités informatiques de reconstruction associées, permet un emploi simplifié des microscopes, un certain nombre de difficultés demeurent :

-   en raison de la nature de l'échantillon observé. En particulier un échantillon biologique issu d'une coloration de Gram, étalé sur une lame de microscope observé par DHM, est un milieu complexe dense, hétérogène, coloré, comprenant des objets microscopiques (e.g. bactéries, levures, champignons) souvent très peu contrastés colorimétriquement, qu'il s'agit de détecter et de caractériser finement pour réaliser un diagnostic in vitro.
-   les images reconstruites par certains procédés numériques standard, telle la propagation de Rayleigh-Sommerfeld, présentent des artefacts appelés images jumelles, qui sont la contrepartie du gain de l'information de phase. D'autres procédés, basés sur des approches dites inverses telle que décrite dans les articles de Soulez, F. et al. mentionnés ci-dessus, n'ont pas ces inconvénients mais nécessitent de pouvoir faire des hypothèses sur la structure de l'objet imagé, par exemple sa planéité ou sa régularité.

Quelle que soit l'approche de reconstruction considérée, la reconstruction va également être dégradée par les aberrations optiques du système d'imagerie DHM, en particulier les aberrations géométriques et colorimétriques. Ces aberrations ajoutent des artefacts à l'image acquise, ce qui complexifie l'analyse et le traitement de cette dernière déjà complexe. Ces artefacts sont également présents dans le cadre de l'imagerie microscopique au focus, mais sont particulièrement gênants dans le cadre de la microscopie holographique, car celle-ci travaille en général hors focus, dans un domaine où les objectifs ne sont pas toujours optimisés, et de surcroît à un défocus variable, avec des aberrations pouvant changer d'une acquisition à l'autre. Ainsi, une caractérisation des aberrations a priori sur une mire séparée, comme cela est souvent réalisé en microscopie, risque de devenir inopérante sur une autre image.

Une correction des aberrations optiques d'un système DHM a été proposé dans l'article Zheng, G., Ou, X., Horstmeyer, R. & Yang, C. « Characterization of spatially varying aberrations for wide field-of-view microscopy ». Opt. Express 21, 15131-15143 (2013). Toutefois cette correction repose sur une hypothèse qu'il existe un point de référence dans l'image où il n'existe aucune aberration, ce qui est une hypothèse forte et souvent fausse, menant à une correction relative (au point de référence) et non absolue.

**EXPOSE DE L'INVENTION**

Le but de l'invention est de proposer un procédé et un système de caractérisation de microorganismes à l'aide de la technologie DHM corrigé d'une partie au moins des aberrations de cette dernière et permettant une caractérisation plus performante des microorganismes.

A cet effet, l'invention a pour objet un procédé de caractérisation de microorganismes présents dans un échantillon biologique, comprenant:

A. pour chaque longueur d'onde d'un ensemble prédéterminé de longueurs d'onde d'au moins une longueur d'onde:

- l'acquisition d'une image numérique holographique de l'échantillon au moyen d'un dispositif d'acquisition en imagerie microscopique défocalisée avec une source de lumière cohérente ou partiellement cohérente, ledit dispositif étant configuré pour former sur un capteur d'image matriciel des figures d'interférence entre la source de lumière et la lumière diffractées par l'échantillon ;
- la génération informatique d'une image focalisée par l'application, à l'image numérique holographique, d'un modèle numérique de reconstruction d'une image focalisée, ladite image focalisée comprenant un ensemble de pixels, chaque pixel comprenant une valeur d'amplitude et une valeur de phase;

  - la segmentation informatique de l'image focalisée de manière à extraire des portions de l'image focalisée correspondant à des microorganismes présents dans l'échantillon;

B. la caractérisation informatique des microorganismes en fonction desdites portions d'images focalisées.

Selon l'invention:

A.1. préalablement à la caractérisation ou préalablement à la segmentation ou préalablement à la génération de l'image focalisée, le procédé comporte la correction informatique d'aberrations optiques du dispositif d'acquisition;
B. 1. la caractérisation informatique des microorganismes comporte l'application d'un modèle numérique auxdites portions d'image focalisée ayant pour descripteurs les valeurs d'amplitude et/ou de phase de chaque longueur d'onde de l'ensemble prédéterminé de longueurs d'onde.

En d'autres termes, la correction des aberrations permet une reconstruction plus robuste de la phase et de l'amplitude (i.e. la norme de l'amplitude complexe, qui est reliée à l'absorbance) des objets présents dans les images focalisées à différentes longueurs d'onde. On observe notamment que l'amplitude et la phase présentent des courbes de valeurs en fonction de la longueur d'onde se différentiant nettement pour des microorganismes différents. La séparation rendue plus nette par la correction des aberrations permet ainsi la mise au point d'un algorithme de classification, par exemple de type apprentissage automatique, ayant des performances améliorées.

De manière avantageuse, une longueur d'onde seulement est utilisée, ladite longueur d'onde étant comprise dans la gamme 530-590nm, et plus particulièrement 550-570nm

Selon un mode de réalisation, l'ensemble prédéterminé de longueurs d'onde comprend au moins deux longueurs d'onde. Plus particulièrement, les aux moins deux longueurs d'onde sont comprises dans la gamme 420-670nm.

Selon un mode de réalisation, l'échantillon consiste en une coloration de GRAM étalée sur une lame de microscope et les aux moins deux longueurs d'onde sont comprises dans la gamme 450-630nm, et plus particulièrement dans la gamme 530-590nm. Plus particulièrement, les aux moins deux longueurs d'onde comprennent les longueurs d'onde 590nm et 622nm.

Selon un mode de réalisation l'échantillon consiste en une coloration de GRAM étalée sur une lame de microscope et en ce que l'une au moins des deux longueurs d'onde soit comprises dans la gamme 420-490nm ou 620-670nm, plus particulièrement 455-490nm ou 660-670nm.

De manière avantageuse :

- l'acquisition des images numériques holographiques comporte la fourniture, dans le champ de vision du dispositif d'acquisition correspondant auxdites images, d'une pluralité d'objets de calibration distincts des microorganismes présents dans l'échantillon biologique, lesdits objets

    - étant préalablement caractérisés en dimension et en indice de réfraction, c'est-à-dire que leur dimension et indice de réfraction se situent dans des intervalles connus ;
    - ayant des dimensions choisies de manière à produire des figures d'interférence sur le capteur d'image matriciel ;
    - ayant une forme choisie de sorte que lesdites figures d'interférence sont calculables en utilisant un modèle de formation d'image intégrant des aberrations optiques du dispositif d'acquisition ;

- préalablement à la génération informatique de l'image focalisée, le procédé comporte :

    - l'identification dans l'image numérique holographique des objets de calibration ;
    - le calcul des figures d'interférence des objets de calibration par l'application du modèle de formation d'image;
    - la quantification des aberrations optiques du dispositif d'acquisition en fonction des figures d'interférence des objets de calibration dans l'image holographique et les figures d'interférence calculées ;

- le modèle numérique de reconstruction de l'image focalisée intègre les aberrations optiques quantifiées.

En d'autres termes, l'invention se propose de corriger le modèle de propagation, ou « propagateur », utilisé pour la reconstruction de l'image focalisée des aberrations du système d'illumination et d'acquisition de l'image sur les figures d'interférence. Comme cela est connu en soi, les propagateurs, comme par exemple les propagateurs de Lorenz-Mie et de Rayleigh-Sommerfeld pour les plus connus, sont basés sur des hypothèses simplificatrices importantes, notamment la perfection des sources lumineuses (e.g. source parfaitement cohérente dans le cadre du DHM), un système d'acquisition sans défaut, ou encore un milieu de propagation des fronts d'onde homogène sans saut d'indice de réfraction. Ces hypothèses sont importantes car elles donnent naissance à des applications industrielles comme la microscopie DHM en raison des relations explicites qui en découlent, relations qui sont manipulables informatiquement. Leur impact sur la reconstruction de l'image focalisée peut cependant être très important sur les performances finales. Plutôt que de rechercher à travailler sur les hypothèses pour définir de nouvelles équations pour le propagateur lui-même, l'invention se propose, grâce à l'ajout d'objets de calibration dans le champ de vision du système d'acquisition DHM, de calculer une fonction de correction qui, lorsqu'elle est conjuguée au propagateur, rétablit dans une certaine mesure la réalité des imperfections de l'application industrielle qui voit ses performances fortement augmentées. Ces objets sont utilisés pour la caractérisation des aberrations, en particulier les aberrations géométriques. Cette caractérisation est réalisée en ajustant aux données, sur certaines zones particulières de l'image, un modèle « direct » de formation d'image intégrant les caractéristiques de l'objet (en particulier position, taille, indice, éventuellement forme) et celles du système optique (en particulier aberrations géométriques).

Il est ainsi avantageux d'utiliser des objets pour lesquels on dispose d'un modèle direct relativement simple, par exemple des sphères d'indice homogène (billes), avec le modèle de Lorenz-Mie. Comme cela sera décrit ci-après, l'emploi de modèle direct permet de combiner, dans un seul modèle, la diffusion de lumière par l'objet de calibration (par exemple un modèle de Lorentz- Mie), son interaction avec le faisceau incident, et les aberrations. Ces aberrations, une fois caractérisées, sont réinjectées dans le modèle de formation de l'image des microorganismes observés, ce qui permet au bout du compte de reconstruire une image (comportant un module et une phase) au focus corrigée, donc une reconstruction plus fine, moins entachée d'artefacts. Une fois l'image reconstruite au focus corrigée des aberrations estimées, celle-ci est interprétable soit directement par un opérateur humain, soit par des procédés d'analyse automatique du type machine learning.

De manière avantageuse, un modèle d'aberrations optiques est calculé pour chaque longueur d'onde de la pluralité de longueurs d'onde en imposant une contrainte sur les paramètres de localisation et/ou géométriques des objets de calibration. En particulier, un modèle de reconstruction de l'image numérique intégrant les aberrations chromatiques est calculé pour chaque longueur d'onde de la pluralité de longueurs d'onde en imposant une contrainte sur les paramètres de localisation des objets, commune à l'ensemble de la pluralité de longueurs d'onde.

En d'autres termes, la correction des aberrations chromatiques sur plusieurs longueurs d'onde peut être effectuée en tirant parti de l'argument physique que certaines caractéristiques des objets, en particulier la localisation et la géométrie, sont invariantes par rapport à la longueur d'onde.

Selon un mode de réalisation, la quantification des aberrations le terme de régularisation commun aux différentes corrections est un terme promouvant la co-localisation des bords des fonctions de transmittance aux multi-longueur d'onde selon la relation :

$$R^{NP} = \sum_{x,y} \sqrt{\sum_{\lambda \epsilon \Lambda} \nabla_{x,y} \Re \left( \underline{t}_\Lambda^t(x,y) \right)^2 + \nabla_{x,y} \Im \left( \underline{t}_\Lambda^t(x,y) \right)^2 + \varepsilon^2} \qquad (14)$$

relation dans laquelle :

- A est l'ensemble des longueurs d'onde utilisées ;
- x et y sont les coordonnées des pixels dans les fonctions de transmittance ;
- $\nabla_{x,y}$ est le symbole du gradient ;
- $\Re$ est la partie réelle d'une fonction ;
- T est la partie imaginaire d'une fonction ;
- ε est un scalaire positif de faible valeur ayant pour objectif de rendre la relation (14) différentiable et éviter une division par zéro dans le calcul de la dérivée du gradient.

L'invention a également pour objet un système de caractérisation de microorganismes présents dans un échantillon biologique configuré pour la mise en oeuvre du procédé précité.

## BREVE DESCRIPTION DES FIGURES

L'invention sera mieux comprise à la lecture de la description qui suit, donnée uniquement à titre d'exemple, et réalisée en relation avec les dessins annexés, dans lesquels :

- la **figure 1** est une vue en coupe schématique d'un système d'acquisition de microscopie holographique numérique ;
- la **figure 2** est une vue en coupe schématique d'une lame de Gram observée par le système de la figure 1 dans une configuration en immersion dans de l'huile ;
- la **figure 3** est un organigramme d'un procédé selon l'invention appliqué à la détection du Gram de microorganismes présents dans un échantillon biologique ;
- la **figure 4** illustre l'impact d'aberrations sur les figures d'interférence produites par le système de la figure 1 ;
- le **figure 5** illustre des amplitude (colonne de gauche) et phase (colonne de droite) reconstruite sans correction des aberrations (ligne du haut) et avec correction des aberrations (ligne du bas) ;
- la **figure 6** illustre une image de phase reconstruite focalisée sans correction des aberrations (image de gauche) et avec correction des aberrations (image de droite);
- la **figure 7** illustre l'absorbance et la phase moyennées sur les pixels de bactéries comprises dans des images refocalisées à différentes longueurs d'onde sans correction ou avec la correction avec le terme de régularisation. Les bactéries sont d'abord segmentées, puis on évalue la moyenne et l'écart-type sur tous les pixels associés à des bactéries.
- les **figures 8** et **9** illustrent les valeurs médianes des amplitude et des phase moyennée avec leur boites de Tukey respectivement avec correction des aberrations et sans correction des aberrations. Les bactéries sont d'abord segmentées, puis l'amplitude et la phase sont moyennées sur les pixels de chaque bactérie, enfin la distribution entre les différentes bactéries de ces amplitudes et phases moyennées est présentée sous forme de boite de Tukey.
- les **figures 10, 11** et **12** illustrent la courbe ROC de modèles prédictifs selon l'invention, à savoir un modèle prédictif sur les 16 canaux (figure 10), un modèle prédictif pour les 8 canaux d'absorbance (figure 11) et un modèle prédictif pour les 8 canaux de phase (figure 12).
- la **figure 13** illustre les valeurs d'aires sous la courbe ROC obtenues pour les différents modèles prédictifs, avec ou sans correction des aberrations, avec les canaux de phase et/ou d'amplitude, et enfin avec toutes ou seulement une longueur d'onde.

## DESCRIPTION DETAILLEE DE L'INVENTION

Il va à présent être décrit un procédé et un système selon l'invention, appliqué à la détermination du Gram de bactéries présentes dans un échantillon biologique prélevé sur un patient.

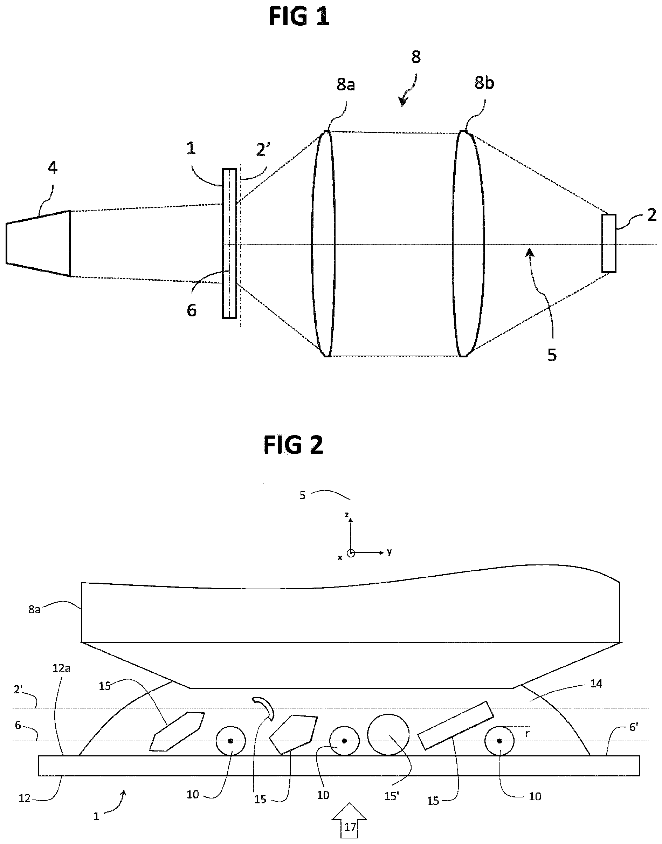

La figure 1 représente schématiquement un système d'imagerie, qui est ici un système d'imagerie holographique en ligne pour imager un échantillon 1 au moyen d'un capteur d'images numérique 2, placé dans un plan image du système d'imagerie holographique. Le système d'imagerie est qualifié de système d'imagerie holographique en ce qu'il est capable d'acquérir des images holographiques, mais ce même système d'imagerie pourrait également acquérir des images non holographiques. Un axe optique 5, libellé axe « z », relie l'échantillon 1 et le capteur d'images 2. Cet axe optique 5 est montré ici rectiligne, mais pourrait être plus complexe, en fonction des configurations. Une source lumineuse 4 est configurée pour illuminer l'échantillon 1 dans le champ de vue (ou « field-of-view ») du système d'imagerie holographique au moyen d'un faisceau de lumière d'illumination suffisamment cohérente pour l'acquisition d'un hologramme, c'est-à-dire cohérente ou partiellement cohérente. La lumière d'illumination présente les caractéristiques conventionnelles pour l'imagerie holographique, sans contraintes additionnelle particulière.

La lumière d'illumination est composée de plusieurs longueurs d'ondes comprise notamment dans la gamme 420nm-670nm, de préférence dans la gamme 450nm-630nm. A titre d'exemple, les longueurs d'onde 431nm, 455nm, 489nm, 532nm, 560nm, 590nm, 622nm et 666nm sont choisies, la source 4 étant constituée de plusieurs LED émettant auxdites longueurs d'onde.

Le système d'imagerie peut comprendre un ensemble d'organes optiques 8 sur le chemin lumineux entre l'échantillon 1 et le capteur d'images 2. Dans l'exemple illustré, le système d'imagerie holographique est muni d'un objectif de microscope 8a et d'une lentille de tube 8b, disposés entre l'échantillon 1 et le capteur d'images numérique 2. Un organe optique tel que l'objectif de microscope 8a est cependant optionnel, l'invention n'étant pas limitée à la microscopie holographique avec lentille ou à un ensemble d'organes optiques particulier. L'arrangement décrit ici est bien entendu un exemple non limitatif. Tout système d'imagerie holographique peut être utilisé, en ligne ou non, avec ou sans objectif de microscope, etc. En effet, le procédé repose sur l'exploitation d'une image holographique acquise par un système d'imagerie. Ainsi, dès lors qu'un système d'imagerie peut acquérir une image holographique dans laquelle apparaissent les figures d'interférence, ce système d'imagerie convient à la mise en oeuvre du procédé. Le système d'imagerie comprend également un système automatisé de traitement de données, non représenté, comprenant au moins un processeur, une mémoire, et qui est configuré pour recevoir au moins une image holographique du capteur d'images 2 et pour traiter cette image holographique selon un procédé selon l'invention. Notamment, le système informatisé, par exemple un ordinateur personnel, comprend une mémoire informatique permanente dans laquelle est mémorisé l'ensemble des instructions lisibles par ordinateur pour la mise en oeuvre des étapes de calcul décrites ci-après.

En se référant à la figure 2, l'échantillon 1 comprend la surface d'intérêt 6 qu'il est souhaité imager. La surface d'intérêt 6 peut être plane dans le plus simple des cas, ou être courbe. La surface d'intérêt 6 peut s'étendre dans un plan perpendiculaire à l'axe optique 5, ou bien présenter une inclinaison (souvent désignée sous le terme anglais de "tilt") par rapport à un plan perpendiculaire à l'axe optique 5. On désigne par position de la surface d'intérêt 6 la disposition spatiale de la surface d'intérêt 6, incluant sa localisation et son éventuelle inclinaison, dans le système d'imagerie. La surface d'intérêt 6 peut être une partie de l'échantillon 1, en particulier lorsque l'échantillon 1 est un objet tridimensionnel présentant un certain volume contenant plusieurs surfaces ou couches à plusieurs positions sur l'axe optique 5. Plus généralement, la surface d'intérêt 6 correspond à l'emplacement de la partie de l'échantillon 1 qu'on cherche à imager. Généralement, l'échantillon 1 repose sur un support 12, comme par exemple une lame de microscope, et la surface d'intérêt 6 peut avantageusement correspondre à l'interface 12a entre le support 12 et l'échantillon 1, ou bien encore à une surface parallèle à cette interface 12a comme dans l'exemple illustré, ou au moins dont la position peut être déduite de la position de l'interface 12a entre le support 12 et l'échantillon 1. Il est à noter que le choix de la surface d'intérêt 6 peut bénéficier d'une forme de connaissance a priori sur l'échantillon 1 et ce qu'on veut y observer, comme par exemple la taille de micro-organismes 15, en particulier de bactéries 15', présents dans l'échantillon 1 et susceptibles de reposer sur le support 12. Par convention, un repère $(O, x, y, z)$ est défini avec pour origine l'intersection de l'axe optique 5 et la surface d'intérêt 6, pour axes orthogonaux $(x, y)$ dans ladite surface 6 et l'axe z égal à l'axe optique 5 et orienté vers le capteur 2.

L'échantillon 1 comprend au moins un objet de calibration 10 qui se trouve à une position correspondant à la position de la surface d'intérêt 6. Un objet de calibration 10 présente une forme connue pouvant être décrite par des paramètres géométriques et un indice de réfraction. De préférence, l'échantillon 1 comprend plusieurs objets de calibration 10, au moins 3 objets de référence 10, et de préférence encore au moins 5 objets de calibration 10. S'il est possible que l'échantillon 1 contienne une multitude d'objets de calibration 10, il n'est généralement pas nécessaire d'avoir plus de 100 objets de calibration 10 apparaissant dans une image acquise. Plus particulièrement, le nombre d'objets de calibration dépend de la précision spatiale souhaitée pour la cartographie des aberrations.

Les paramètres caractérisants associés aux objets de calibration 10 comprennent au moins des paramètres de position localisant individuellement chacun des objets de calibration 10, typiquement des coordonnées de position. On entend par position d'un objet de référence 10 la disposition spatiale dudit objet de référence 10, incluant sa localisation et son éventuelle inclinaison, dans le système d'imagerie. De préférence, les paramètres caractérisants associés aux objets de calibration 10 comprennent également des paramètres géométriques décrivant la forme connue des objets de calibration 10. Les paramètres géométriques correspondent à une connaissance a priori de la forme géométrique des objets de calibration 10. A cet égard, les objets de calibration 10 présentent une forme géométrique simple, et de préférence, un objet de calibration 10 a une forme sphérique, cylindrique ou ellipsoïdique de manière à pouvoir utiliser des approches de reconstruction 3D dite paramétriques comme cela sera détaillé ci-dessous. Dans le cas d'un objet de calibration 10 ayant une forme sphérique, les paramètres géométriques pourront simplement être constitués par le rayon r d'une sphère modélisant l'objet de calibration 10, les coordonnées de position correspondant alors à la position du centre de cette sphère. Plus généralement, les paramètres sont ceux pris en compte par le modèle de diffraction de la lumière qui sera utilisé (par exemple le modèle de Mie, le modèle de Mie généralisé, le modèle de Thompson ou le modèle de Rayleigh). Ainsi, pour un objet de calibration 10 globalement sphérique, le modèle de diffraction de la lumière de Mie (ou solution de Lorenz-Mie) ne requiert que le rayon de la sphère en tant que paramètre géométrique. Dans le cas d'un objet de calibration 10 avec une forme globalement cylindrique, un rayon et une longueur constituent les seuls paramètres géométriques nécessaires pour décrire la forme. Par conséquent, tous les paramètres géométriques des objets de calibration 10 n'ont pas à être connus, mais uniquement ceux correspondant à une approximation de la forme des objets de calibration 10 et qui sont utilisés par le modèle de diffraction de la lumière.

La taille de l'objet de calibration 10 peut être choisie dans une gamme large, et peut par exemple présenter un diamètre (plus grande dimension) allant de 10 nm à 100 $\mu$m. Le choix de la taille de l'objet de calibration 10 est plutôt conditionné par des aspects secondaires. D'une part, la taille de l'objet de calibration 10 doit permettre de générer un contraste suffisant, en prenant en compte la longueur d'onde de la lumière d'illumination, la différence d'indice avec le milieu autour de l'objet de calibration 10, voire le contraste généré par d'autres objets dans l'image holographique. Le diamètre de l'objet de calibration 10 est ainsi de préférence supérieure à 10 nm, et de préférence encore supérieur à 100 nm. D'autre part, la surface projetée des objets de calibration 10 sur le capteur d'images 2 ne doit pas être trop importante de manière à ne pas altérer la qualité de l'image holographique. Typiquement, une surface projetée inférieure à 10 % (et de préférence encore inférieure à 1%) permettra une bonne qualité d'image holographique, si par ailleurs le reste de l'échantillon 1 n'est pas trop dense. En outre, les objets de calibration 10 ne doivent pas masquer le reste de l'échantillon 1, et notamment la surface d'intérêt 6. La taille des objets de calibration 10 est donc choisie afin de ne pas occuper trop d'espace dans le champ de vue du capteur d'images 2. A cet égard, les objets de calibration 10 sont de préférence distants les uns des autres, et non pas adjacents, et sont de préférence répartis sur tout le champ de vue du capteur d'images 2, de manière éparse.

Un objet de calibration 10 présente, comme tout matériau, un indice de réfraction. Dans la mesure où l'objet de calibration 10 est distinct du reste de l'échantillon 1, son indice de réfraction diffère du milieu qui l'entoure, même très faiblement. Ainsi, un indice de réfraction d'un objet de calibration 10 qui diffère de 0,01 de l'indice de réfraction du milieu environnant l'objet de calibration 10 permet d'identifier son impact sur la diffraction lumineuse dans une image acquise, et permet donc de mettre en oeuvre la méthode. De préférence toutefois, l'indice de réfraction de l'objet de référence 10 diffère d'au moins 0,05 par rapport à l'indice de réfaction de la partie de l'échantillon 1 immédiatement adjacente à l'objet de calibration 10, et de préférence encore d'au moins 0,1. L'indice de réfraction de l'objet de calibration 10 est de préférence connu et renseigné dans le modèle de diffraction de la lumière. En particulier, dans le cas où l'objet de calibration 10 est opaque, c'est-à-dire que la composante complexe de son indice de réfraction peut être considérée comme tendant vers l'infini à la longueur d'onde considérée, le modèle de diffraction de la lumière peut être modifié en conséquence afin de limiter le nombre de paramètres à ajuster pour diminuer le temps de calcul, et éviter un éventuel sur-ajustement. Dans le cas d'un objet de calibration 10 transparent ou partiellement transparent, l'indice de réfraction de l'objet de calibration 10 peut également être inconnu, ou connu de façon imprécise, et peut être estimé de la même manière que les paramètres géométriques ou de position associés à l'objet de calibration 10, via l'utilisation du modèle de diffraction, et faire ainsi parti des paramètres caractérisants associés à l'objet de calibration 10.

En se référant à la figure 2, l'échantillon 1 peut comprendre un milieu d'immersion 14, notamment du glycérol lorsque le système d'acquisition 8 comprend un microscope à immersion et le modèle de diffraction de la lumière peut impliquer un indice de réfraction dudit milieu d'immersion 14.

En dehors du fait que l'objet de calibration 10 doit présenter une forme connue décrite par des paramètres caractérisants qui lui sont associés, ou alors une très petite taille par rapport à longueur d'onde de la lumière d'illumination, peu de contraintes pèsent sur le choix d'un objet de calibration 10. Un objet de référence 10 peut être opaque ou transparent, et peut être constitué de matières variées, comme par exemple la silice, le polystyrène, ou un métal tel que l'or. Au regard des considérations ci-dessus, un objet de calibration 10 peut être un objet artificiel ajouté à l'échantillon 1. L'avantage d'ajouter un objet de calibration artificiel réside principalement dans la connaissance fine de ses paramètres géométriques et de son indice de réfraction, ainsi que dans la régularité de sa forme. En cas d'objets de calibration 10 artificiels ajoutés à l'échantillon 1, ceux-ci sont choisis pour présenter une forme simple et régulière, de préférence cylindrique ou ellipsoïdique, et de préférence encore une forme sphérique, afin de permettre la meilleure adéquation entre la forme réelle de l'objet de calibration 10 et son approximation décrite par les paramètres caractérisants pris en compte par le modèle de diffraction. Par exemple, dans le cas illustré dans la Figure 2, les objets de calibration 10 sont des billes de polystyrène, opaques, d'un diamètre de 1 $\mu$m.

L'objet de calibration 10 peut également être présent sur le support 12 de l'échantillon 1, faisant partie du support 12 au niveau de son interface avec l'échantillon 1. Il est par exemple possible de graver, par exemple par photolithographie, la surface 12a du support 12 pour y faire apparaître des formes, de préférence arrondies, pouvant répondre aux exigences d'un objet de calibration (nervures arrondies par exemple).

Ainsi qu'évoqué précédemment, l'objet de calibration 10 se trouve à une position en correspondance avec la position de la surface d'intérêt 6, c'est-à-dire qu'il existe une relation de correspondance entre la position de la surface d'intérêt 6 et la position de chaque objet de calibration 10. Par exemple, la masse volumique des objets 10 est choisie de sorte qu'ils se déposent sur le support 12. La surface d'intérêt 6 à imager est alors définie par le plan passant par les centres des objets 10 lorsque ces derniers sont des billes calibrées. On notera qu'il est également possible de mettre en oeuvre l'invention pour des objets de calibration en suspension dans le milieu 14.

Si certaines configurations ne posent aucun problème, comme par exemple lorsque la surface d'intérêt 6 coïncide avec une surface du support 12 sur laquelle sont formés des objets de calibration 10, d'autres configurations peuvent parfois nécessiter de prendre des précautions afin de s'assurer de la correspondance entre la position d'un objet de calibration 10 et la surface d'intérêt 6. Lorsque la surface d'intérêt 6 coïncide avec la surface 12a du support 12, ou est liée à cette surface 12a du support 12 par exemple par une relation de parallélisme, il est possible de déposer les objets de calibration 10 directement sur la surface 12a du support 12 avant la mise en place du reste de l'échantillon 1 sur le support 12. Ainsi, un milieu d'immersion 14 fluide (par exemple de l'eau) contenant les objets de calibration 10 en suspension peut être préalablement déposé sur la surface 12a du support 12 avant la mise en place du reste de l'échantillon 1.

Une fois l'échantillon 1 mis en place, l'échantillon 1 est illuminé 17, et le capteur d'images 2 acquiert au moins une image holographique bidimensionnelle à chaque longueur d'onde. Il peut s'agir d'une image acquise de façon isolée, ou d'une série d'images, et en particulier d'une série d'images holographiques acquises pour différentes positions du plan d'acquisition 2' relativement à l'échantillon 1 le long de l'axe optique 5 et/ou avec des longueurs d'onde différentes pour la lumière d'illumination.

Ces différentes positions du plan d'acquisition 2' relativement à l'échantillon 1 peuvent être obtenues par différentes positions de l'échantillon 1 le long de l'axe optique 5 relativement au capteur d'images 2, par exemple en déplaçant le capteur d'images 2, par exemple via un rail motorisé ou une platine motorisée.

De même que tout type de système d'imagerie holographique peut être utilisé comme évoqué plus haut, diverses techniques d'acquisition d'images holographiques peuvent être utilisées, dès lors que l'image acquise fait apparaître les effets optiques de la présence des objets de référence 10 dans le champ de vue du capteur d'images numérique 2, et en particulier les figures d'interférence générées par les interférences entre la lumière d'illumination et la lumière diffusée par les objets de référence 10, apparaissant dans l'image holographiques comme des motifs d'interférence causés par l'objet de référence. Il va sans dire toutefois que l'image est acquise avec le système d'imagerie holographique dans une configuration adaptée pour imager les objets de calibration 10 (ou plutôt les motifs d'interférence causés par ceux-ci), et donc avec les réglages adéquats (illumination, etc.) courants pour l'homme du métier.

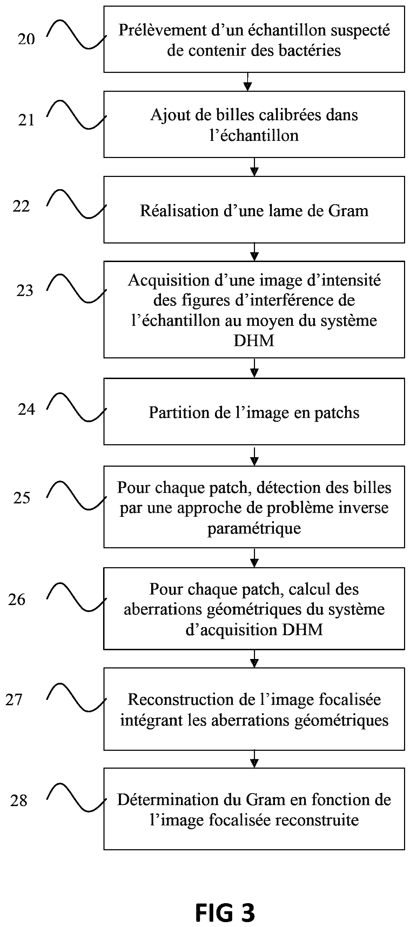

Un exemple du procédé de correction des aberrations pour une longueur d'onde particulière de l'ensemble de longueurs d'onde est à présent décrit en relation avec la figure 3.

Le procédé de détermination du Gram de bactéries débute, en 20, par le prélèvement d'un échantillon biologique suspecté de contenir des microorganismes, notamment des bactéries, des levures ou des champignons. L'échantillon peut être de tout type, par exemple un échantillon prélevé sur un patient ou sur un animal, un échantillon prélevé sur un produit cosmétique ou sur un produit alimentaire, ou un échantillon environnemental (eau, sol, air...).

A cet échantillon sous forme liquide, est alors ajouté en 21 des billes faisant office d'objets de calibration pour la correction des aberrations géométriques impactant la formation des figures d'interférence acquises par le système d'acquisition DHM 8. Pour une réalisation correcte de cette correction, l'échantillon est avantageusement une suspension colloïdale stable pour éviter l'agrégation des billes avant le dépôt de l'échantillon biologique sur une lame de microscope. De manière avantageuse :

 i. La taille et l'indice de réfraction des billes sont en outre choisis de sorte à présenter une variation limitée, de préférence inférieure à 50%. Comme cela sera décrit ci-après, cette limitation permet une identification automatique efficace des billes dans les images DHM acquise, et permet donc une automatisation complète du procédé selon l'invention.

 ii. Les billes ne doivent pas être trop similaires aux objets attendus dans l'échantillon afin de limiter le risque de confusion avec ces objets. En particulier, dans le cas, fréquent en microbiologie, ou des objets biologiques quasi-sphériques et de taille comparable à la bille pourraient être présents (par exemple des coques), les indices des billes et celui des microorganismes diffèrent suffisamment, ce qui peut se faire par exemple par le truchement du choix du matériau des billes (p. ex. un métal), ou par celui de la coloration des microorganismes (composante complexe de l'indice de réfraction non nulle dans certaines longueurs d'ondes).

 iii. La taille de la bille est suffisamment grande pour diffuser suffisamment la lumière incidente (d'après la loi de Rayleigh, des particules très petites diffusent peu la lumière, selon une loi en $1/r^4$) pour former une figure d'interférence suffisamment contrastée sur le plan du capteur 2. Elle doit être par ailleurs suffisamment petite pour permettre une diffusion dans un angle suffisamment large (selon la loi de Mie), et éviter d'occuper une part trop importante du champ. En pratique, une bille de quelques dizaines de nm à quelques dizaines de $\mu$m convient, avec

une préférence dans la zone de quelques centaines de nm à quelques $\mu$m.

iv. La concentration surfacique de billes déposées sur la lame de microscope découle du volume déposé, de la concentration initiale de billes et de leur état d'agrégation éventuels, est choisie judicieusement. Si après dépôt la concentration surfacique de billes est trop faible, on risque de ne pas en avoir dans le champ, ou pas suffisamment pour réaliser une cartographie correcte. Inversement, si celle-ci est trop élevée, elles vont diffuser trop la lumière incidente, réduire le rapport signal sur bruit des objets d'intérêt et introduire des artefacts dans la reconstruction. En pratique, 3 à 300 billes en moyenne par champ est une zone de fonctionnement, avec une préférence pour 5 à 30 comme décrit ci-dessous.

v. La forme de l'objet calibrant doit permettre la mise en oeuvre d'un modèle direct de diffusion de la lumière. Une bille étant sphérique, on est dans le cas relativement simple où le modèle de Lorenz-Mie s'applique, mais si nécessaire d'autres modèles de diffusion existent pour des objets plus complexes, comme décrit par exemple dans l'article de Gouesbet, G. & Mees, L. Generalized Lorenz-Mie theory for infinitely long elliptical cylinders. JOSA A 16, 1333-1341 (1999).

Le procédé se poursuit, en 22, par la réalisation d'une lame de Gram d'une manière connue en soi. Une fois l'échantillon séché, du glycérol est ajouté sur la lame de microscope, le microscope immergé dans le glycérol et une ou plusieurs images DHM sont acquises en 23.

L'image DHM acquise est alors avantageusement découpée, en 24, en plusieurs sous-images, ou « patchs », de manière à obtenir une correction des aberrations du système d'acquisition 8 variable dans le champ de vision de ce dernier.

Le procédé se poursuit, en 25, par une caractérisation approximative des positions et des caractéristiques géométriques et d'indices des billes 10 dans chaque patch en mettant en oeuvre une reconstruction de l'image focalisée des billes 10 à l'aide d'un propagateur non corrigé des aberrations. Cette étape, optionnelle, a pour principal objectif de caractériser de manière approximative l'espace de recherche décrit ci-après, notamment d'identifier les zones dans lesquelles les optima locaux recherchés se situent afin d'accélérer le temps de calcul. Cette étape permet ainsi une mise en oeuvre en (quasi) temps réel du procédé selon l'invention et/ou l'emploi de ressources informatiques limitées. Si le procédé selon l'invention utilise des ressources informatiques importantes, comme par exemple une architecture réseau composée d'un nombre suffisant de noeuds de calcul pour le temps de calcul visé, des hypothèses *a priori* sur l'espace de recherche peuvent être déterminées et l'étape 25 omise.

L'étape 25 repose avantageusement sur une approche paramétrique de reconstruction des billes rendue possible par le choix de la géométrie des objets de calibration. La reconstruction utilise un propagateur de Lorenz-Mie, par exemple celui décrit dans l'article de Slimani, Farid et al. Near-field Lorenz-Mie theory and its application to microholography », Applied Optics (1984). Dans une première itération, un problème d'optimisation selon la relation suivante est mis en oeuvre :

$$v^t = arg\min_{v \in D} \left\| d - m^{Mie}(v) \right\|_{2,W}^2 \qquad (1)$$

relation dans laquelle :

- $v = (x\,y\,z\,r\,n)$ caractérise la position $(x, y, z)$ dans un repère dont l'origine est égale à l'intersection entre l'axe optique 5 et le plan du capteur 2, r est le rayon des billes et n est leur indice de réfraction ;
- $m^{Mie}(v)$ est le modèle de Lorenz-Mie appliqué à une bille ;
- $d$ est l'image d'intensité du patch considéré ;
- $\| \bullet \|_{2,W}$ la norme des moindre carrés pondérée par l'inverse de la matrice de covariance du bruit. Ce bruit peut être caractérisé *a priori* pour améliorer les performances de la détection (e.g. le bruit du capteur, les pixels morts, etc). Par défaut le bruit est considéré comme uniforme et égal à un bruit blanc Gaussien ;
- $D$ est un domaine de recherche avantageusement limité aux caractéristiques des billes qui sont calibrées. Notamment l'espace de recherche est limité dans ses variables r et $n$ à l'espace $[r_0 - \Delta r; r_0 + \Delta r] \times [n_0 - \Delta n; n_0 + \Delta n]$ où $r_0$ et $n_0$ sont respectivement les valeurs nominales du rayon et de l'indice de réfraction des billes, et $\Delta r$ et $\Delta n$ sont respectivement leur dispersion, ces données étant par exemple fournies par le fabriquant des billes. De préférence l'indice des billes, et plus généralement des objets de calibration, est connu avec une incertitude $\Delta n$ de $\pm$ 2%. Dans la première itération, l'espace de recherche spatial $(x, y, z)$ est limité au champ de vision du système d'acquisition correspondant au patch considéré et à une profondeur z approximative correspondant à l'échantillon 1.

Le modèle étant invariant par translation en (x, y), la résolution de ce problème revient à trouver un maximum de corrélation entre le modèle et les données dans le plan (x, y), pour chaque sous-jeu de paramètres (z, r, n). Pour une résolution efficace du problème selon la relation 1, l'algorithme LINCOA décrit dans le document J. Nocedal and S. Wright, Numerical optimization. Springer Science & Business Media, 2006 est préféré.

A l'issue de cette première itération, si les résidus sont inférieurs à un seuil prédéterminé, par exemple quantifié par la norme des moindres carrés, alors une première bille de caractéristiques $v^t$ est identifiée à la position $(x^t \, y^t \, z^t)$ avec un rayon $r^t$ et un indice $n^t$. Le choix de billes ayant un indice de réfraction différent des objets attendus dans l'échantillon biologique, le problème d'optimisation (1) permet d'identifier la bille parmi les autres objets. A l'issue de cette première itération, la figure d'interférence correspondant à la bille identifiée est soustraite du patch, puis un nouveau problème d'optimisation selon la relation (1) avec le patch éliminé de la figure d'interférence est mis en oeuvre. Ce processus itératif continue tant qu'une nouvelle bille est détectée. Une fois le processus stoppé pour ce patch, l'étape 25 est mise en oeuvre pour le patch suivant jusqu'à avoir parcouru tous les patchs. Pour une détection approximative des billes, on pourra également se référer à la méthode décrite dans l'article de Soulez, F., Denis, L., Fournier, C., Thiébaut, É. & Goepfert, C. Inverse-problem approach for particle digital holography: accurate location based on local optimization. JOSA A 24, 1164-1171 (2007).

Après avoir mis en oeuvre l'étape 25, on aboutit donc à une évaluation grossière de leurs paramètres de position, de rayon et d'indice de réfraction.

Le procédé selon l'invention se poursuit, pour chaque patch, par le calcul 26 des aberrations impactant les figures d'interférences des billes.

Comme cela est connu en soi, la reconstruction d'une image focalisée de la surface d'intérêt 6 consiste à trouver la fonction de transmittance $\underline{t}^t(x, y)$ de cette surface correspondant à un minimum local du problème d'optimisation suivant :

$$\underline{t}^t = arg\min_{\underline{t}} \left\| d - m^{NP}(\underline{t}) \right\|^2_{2,W} \tag{2}$$

$$m^{NP}(\underline{t}) = \left| \underline{t} * \underline{h}^{NP}_{z^6} \right|^2 \tag{3}$$

où * est la convolution et $\underline{h}^{NP}_{z^6}$ est un propagateur à la distance $z^6$ entre la surface d'intérêt 6 et le plan du capteur 2, ce propagateur est choisi en fonction de l'application visée. Comme rappelé ci-dessus, les propagateurs de l'état de la technique ne prennent pas en compte les aberrations, de quelque nature que ce soit, impactant les figures d'interférence enregistrées par le capteur 2.

Selon un mode de réalisation privilégié, l'invention se propose :

1. de modifier le propagateur $\underline{h}^{NP}_{z^6}$ selon l'état de la technique par un propagateur $\underline{h}^{INV}_{z^6}$ selon la relation :

$$\underline{h}^{INV}_{z^6} = \underline{h}^{NP}_{z^6} * p(x, y) \tag{4}$$

où $p(x,y)$ est une fonction quantifiant les aberrations géométriques sur les figures d'interférence dans le plan du capteur 2, ci-après nommée « fonction d'aberration ».

2. de décrire la fonction $p(x, y)$ dans une base fréquentielle choisie en fonction du système d'acquisition DHM telle que :

$$F_{K_x, K_y}\left(p(x, y)\right) = P\left(K_x, K_y, \alpha\right) = e^{i\left(\sum_i \alpha_i \times b_i(K_x, K_y)\right)} \tag{5}$$

Où $F_{K_x, K_y}$ est la transformée de Fourier, $K_x$ et $K_y$ étant les coordonnées fréquentielles dans le domaine de Fourier, $b = \{b_i(K_x, K_y)\}_i$ sont les éléments de la base fréquentielle et $\alpha = \{\alpha_i\}_i$ sont les coordonnées de la fonction $F_{K_x, K_y}(p(x,y))$ dans la base $b$. De manière avantageuse, comme cela sera décrit ci-après, la base b est celle des polynômes de Zernike $Z_n^m(K_x, K_y)$ qui sont particulièrement bien adaptés pour capturer, dans le domaine fréquentiel, les aberrations géométriques des systèmes optiques invariants en première approximation autour de l'axe optique. De tels polynômes sont décrits par exemple dans l'article de Zheng, G., Ou, X., Horstmeyer, R. & Yang, C. Characterization of spatially varying aberrations for wide field-of-view microscopy. Opt. Express 21, 15131-15143 (2013). D'autres polynômes sont possibles, par exemple les polynômes de Legendre.

3. de calculer les coordonnées $\{\alpha_i\}_i$ de la fonction $F_{K_x,K_y}(p(x,y))$ conjointement avec le vecteur $v = (x\,y\,z\,r\,n)$ des billes de calibration en utilisant un propagateur paramétrique $\underline{h}_{z^6}^{NP}$ dont le principal avantage est de fournir une recherche dans l'espace des solutions qui converge sans avoir à régulariser le problème d'optimisation, par exemple les polynômes de Legendre ou le propagateur de Lorenz-Mie appliqué aux billes. Notamment, il est ajusté un modèle de formation d'image holographique (par exemple le modèle de Lorentz-Mie) convolué avec le modèle des aberrations $p$ $(x, y)$ aux données pour chaque bille, les paramètres à ajuster étant les paramètres $(x\,y\,z\,r\,n)$ ainsi que les $\{\alpha_i\}_i$.

Plus particulièrement, l'étape 26 met en oeuvre, pour chaque patch et pour chaque bille détectée dans le patch, le problème d'optimisation selon les relations :

$$\{v^t, \alpha^t\} = arg \min_{v \in D, \alpha \in C} \left\| d - \underline{m}(v, \alpha) \right\|_{2,W}^2 \tag{6}$$

$$m(v, \alpha) = \left| F_{x,y}^{-1}\left( p(K_x, K_y, \alpha) \odot F_{K_x, K_y}\left( m^{Mie}(v) \right) \right) \right|^2 \tag{7}$$

$$p\left(K_x, K_y, \alpha\right) = e^{i\left(\Sigma_{n,m}\left(\alpha_n^m \times Z_n^m(K_x, K_y)\right)\right)} \tag{8}$$

$$Z_n^m\left(K_x, K_y\right) = \begin{cases} \sqrt{\dfrac{2(n+1)}{1+\delta_{m,0}}} R_n^{|m|}(\rho)sin(m\phi) & sim > 0 \\ -\sqrt{2(n+1)} R_n^{|m|}(\rho)cos(m\phi) & sinon \end{cases} \tag{9}$$

$$\rho = \frac{\lambda}{NA}\sqrt{K_x^2 + K_x^2}$$
$$\phi = arctan\left(\frac{K_y}{K_y}\right) \tag{9}$$

$$n \in N \text{ et } m \in Z \text{ vérifiant } n \geq |m| \text{ et } n - |m| \in 2N$$

relations dans lesquelles :

- $\odot$ est le produit d'Hadamard,
- $\underline{m}^{Mie}$ est le modèle de Lorenz-Mie appliqué à un bille,
- NA est l'ouverture numérique du système d'acquisition 8 et $\lambda$ la longueur d'onde de l'illumination ;
- $F_{x,y}^{-1}$ est la transformée de Fourier inverse,
- $D$ est l'espace de recherche du vecteur $v = (x\,y\,z\,r\,n)$ de la bille considérée. Cet espace de recherche est avantageusement déterminé par les résultats de l'étape 25, e.g. $v^t \pm \Delta v^t$ avec $\Delta v^t/v^t < 0,1$. De préférence l'indice de réfraction des billes, et plus généralement des objets de calibration, est connu avec une incertitude $\Delta n$ de $\pm$ 2%.
- $C$ est l'espace de recherche des coordonnées $\alpha = \{\alpha_n^m\}_{n,m}$ dans la base des polynômes de Zernike $Z_n^m$. Des études réalisées par les inventeurs montrent que pour un système d'acquisition DHM tel que décrit à la figure 1, les coefficients $\alpha_n^m$ sont compris entre -10 et 10, $C$ étant de préférence limité à l'hypercube correspondant.

Les inventeurs ont constaté que la fonction $P(K_x, K_y, \alpha)$ est précisément déterminée par les 15 premiers polynômes de Zernike, le vecteur $\alpha = \{\alpha_n^m\}_{n,m}$ étant donc limité à ces derniers. Le coefficient $\alpha_0^0$ peut en outre être posé à 0 car le modèle est invariant par une translation de phase. Par ailleurs les coefficients $\alpha_1^{-1} \alpha_1^1$ peuvent également être posés à 0 pour maintenir la fonction d'étalement du point (ou « Point Spread Function », ou PSF, fonction qui décrit la réponse du système optique 8 à une source ponctuelle) centrée latéralement. Le problème d'optimisation ci-dessous comprend ainsi 12 paramètres ajustables pour le modèle d'aberrations rendant compte de différentes aberrations géométriques : astigmatisme oblique, coma horizontale et verticale, aberrations sphériques, et astigmatisme oblique secondaire. A ces 12 paramètres s'ajoutent les 5 paramètres du modèle de diffusion par la bille (3 paramètres spatiaux, rayon et indice). De préférence, la résolution du problème selon les relations (6-9) est réalisée par l'algorithme LINCOA ou d'autres algorithmes d'optimisation tels que celui décrit par M.J.D. Powell dans « On fast trust région methods for quadritic models with linear constraints », Report of the Department of Applied Mathematics and Theoretical Physics, Cambridge University, DAMTP 2014/NA02 (2014).

A l'issue de l'étape 26, il est donc obtenu une fonction d'aberration $p(x, y)$ pour chaque position des figures d'interférence correspondant aux billes de calibration. Dans une première variante, une fonction par patch est retenue, par exemple en moyennant les fonctions p(x,y) dans ce patch. Dans une seconde variante, une fonction $p(x, y)$ globale pour l'ensemble du champ de vision est déterminée par une interpolation des fonctions $p(x, y)$ calculées sur tous les patchs.

Le procédé se poursuit, en 27, par la reconstruction d'une image refocalisée à partir de l'image DHM acquise au moyen d'un modèle de reconstruction intégrant les aberrations géométriques modélisées. Concernant la détermination du Gram de microorganismes, ces derniers ne sont pas connus à ce stade. Ils peuvent donc prendre différentes formes (coques ou bâtonnets par exemple), des tailles variables ou encore former des agrégats ou des chaînettes. De plus l'échantillon peut comprendre des objets divers (e.g. globules rouges). Il n'est donc pas fait d'hypothèse sur le contenu de l'échantillon de sorte qu'un propagateur non paramétrique est utilisé, par exemple un propagateur de Rayleigh-Sommerfeld $\underline{h}_z^{RS}(x,y)$. La reconstruction de la surface d'intérêt 6 est obtenue en résolvant le problème selon les relations :

$$\underline{t}^t(x,y) = arg\,\min_{\underline{t}(x,y)} \left( D^{NP}\left(\underline{t}(x,y), d(x,y)\right) + \mu R^{NP}\left(\underline{t}(x,y,z)\right) \right) \qquad (10)$$

$$D^{NP}\left(\underline{t}(x,y), d(x,y)\right) = \|d(x,y) - m^{NP}(v,\alpha)\|_W^2 \qquad (11)$$

$$m^{NP}(v,\alpha) = \underline{t}\;\;(x,y) * \underline{h}_z^{RS}(x,y) * p(x,y) \qquad (12)$$

$$\underline{h}_z^{RS}(x,y) = \frac{z}{i\lambda}\frac{exp\left(i\frac{2\pi}{\lambda}\sqrt{x^2+y^2+z^2}\right)}{x^2+y^2+z^2} \qquad (13)$$

relations dans lesquelles :

- $\mu$ est un scalaire prédéterminé ou bien un problème selon les relations précédentes est résolu pour chaque valeur d'un ensemble prédéterminé de scalaires ;
- $R^{NP}$ ($\underline{t}(x, y)$) est un terme de régularisation garantissant la convergence du problème d'optimisation, de préférence choisi en fonction d'informations *a priori* sur l'image reconstruite attendue, par exemple, dans le cas d'une lame de Gram qui est usuellement peu contrastée, la norme L1 du gradient de la fonction de transmittance t(x, y) ou la variation totale (« Total Variation ») telle que décrite dans l'article de F. Jolivet et al. « Regularized reconstruction of absorbing and phase object from a single in-line hologram, application to fluid mechanics and micro-biology », Opt. Express 26, 2018;
- la distance z est fixée à la moyenne des distances z calculées pour les billes à l'étape 26 ou bien plusieurs distances z sont choisies afin d'obtenir une pile d'images focalisées et donc plusieurs surfaces d'intérêt 6.

De préférence, la résolution du problème selon les relations (10-13) est réalisée par l'algorithme LINCOA ou l'algorithme de Powell par exemple.

La correction des aberrations venant d'être décrite pour une longueur d'onde est réitérée pour chacune des longueurs d'onde de sorte à obtenir une ou plusieurs images reconstruites focalisées pour chacune des longueurs d'onde. Il est ainsi obtenu un ensemble d'images, chaque pixel d'une image comprenant une valeur d'absorbance et de phase, dans la gamme de longueurs d'onde 420nm-670nm.

Le procédé se poursuit, en 28, par l'analyse du ou des images focalisées reconstruites afin d'identifier les microorganismes qu'elles contiennent et leur Gram. Cette analyse est réalisée d'une manière connue en soi, par exemple par un technicien de laboratoire spécialiste du Gram qui analyse un écran sur lequel sont affichées la ou les images focalisées reconstruite, ou par l'utilisation d'outils informatiques de caractérisation automatique à base de machine learning. La détermination du Gram permet ensuite d'adapter l'antibiothérapie dans le cas d'un patient suspecté d'être infecté par une bactérie pathogène, ou de manière plus générale une thérapie antimicrobienne. La détermination du Gram permet également d'orienter le flux de travail d'analyse microbiologique comme par exemple le choix d'un milieu de culture pour l'identification subséquente des microorganismes présents dans l'échantillon, le choix d'une carte utilisée pour la réalisation d'un antibiogramme par la plateforme Vitek®2 commercialisée par la société bioMérieux ou encore le choix de milieu utilisé pour la réalisation d'une identification par la plateforme Vitek®MS ou Vitek®MS PRIME commercialisées par la société bioMérieux.

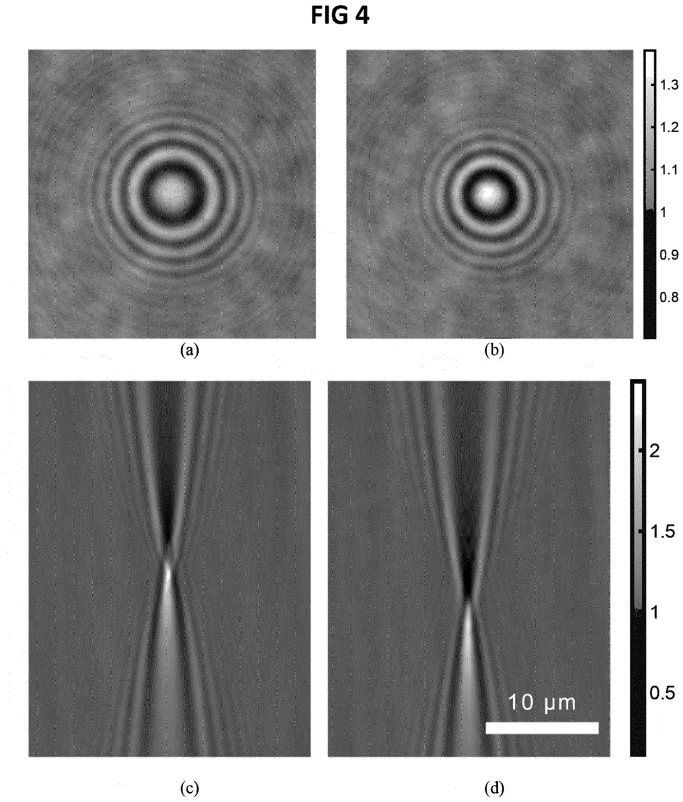

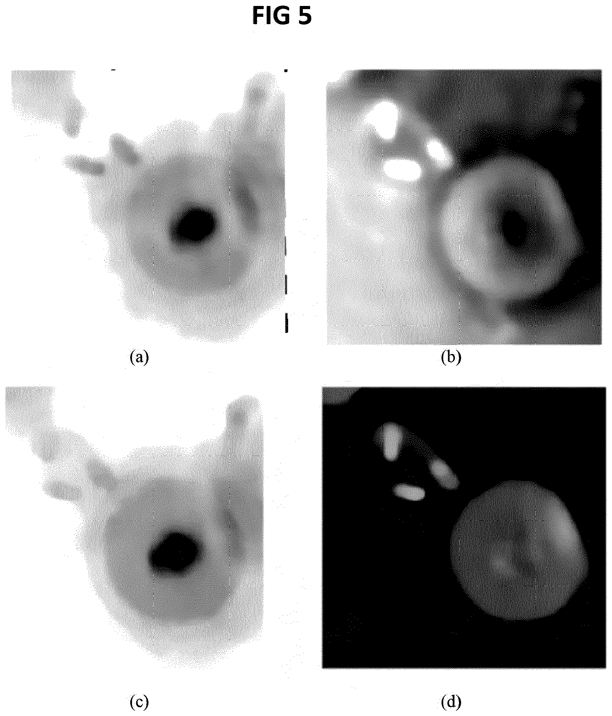

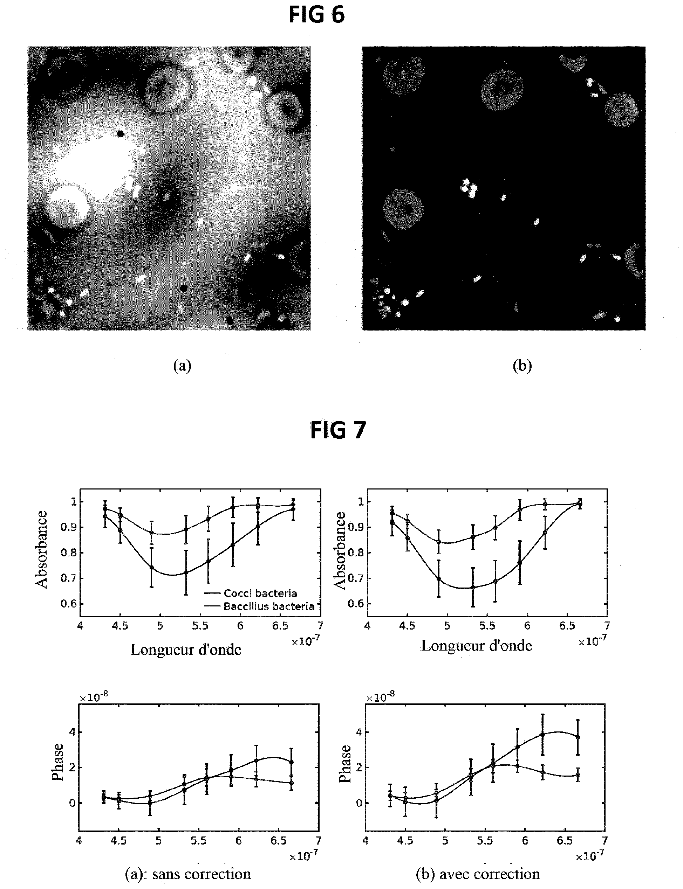

La figure 4 illustre l'effet des aberrations introduites par un système tel que décrit à la figure 1. La colonne de gauche illustre un système présentant un niveau d'aberration contenu et la colonne de droite un niveau d'aberration important. Comme cela est visible, les figures d'interférence, ici celles associées à une bille de calibration, sont fortement impactées tant dans le plan du capteur, que dans leur position selon l'axe optique. Les figures 5(a) et 5(b) illustrent respectivement l'amplitude et la phase reconstruites d'une portion de lame de Gram sans correction des aberrations selon l'invention et les figures 5(c) et 5(d) cette même portion de lame de Gram avec application de la correction des aberrations selon l'invention. La figure 6 illustre une image globale reconstruite au focus sans correction des aberrations (Figure 6(a)) et avec correction des aberrations (Figure 6(b)).

Selon l'invention, plusieurs longueurs d'onde sont utilisées pour caractériser un échantillon.

La manière la plus simple de corriger les aberrations sur l'ensemble des longueurs d'onde sélectionnée est de répéter le procédé de correction des aberrations décrit ci-dessus pour chacune des longueurs d'ondes indépendamment. Une fonction quantifiant les aberrations $p(x, y)$ et une fonction de transmittance $\underline{t}^t(x, y)$ sont ainsi obtenues pour chaque longueur d'onde $\lambda$, d'un ensemble de longueurs d'onde A pour lequel il est souhaité une correction des aberrations. Ces fonctions seront ci-après notées $p_\lambda(x, y)\ et\ \underline{t}^t_\lambda(x, y)$ pour la longueur d'onde $\lambda$. Une correction efficace des aberrations chromatiques est ainsi obtenue.

Au-delà de ce traitement indépendant, et de manière avantageuse, la correction des aberrations chromatiques sur plusieurs longueurs d'onde peut être effectuée en tirant parti de l'argument physique que certaines caractéristiques des objets, en particulier la localisation et la géométrie, sont invariantes par rapport à la longueur d'onde. Deux méthodes selon l'invention permettent de réaliser cela, qui peuvent être utilisées indépendamment ou en combinaison :

1. On commence par fixer une des longueurs d'ondes comme référence (notée $\lambda_{ref}$ dans la suite) et on effectue les étapes 25 et 26 du procédé. On obtient ainsi la fonction quantifiant les aberrations $p_{\lambda ref}(x, y)$, et aussi les caractéristiques des objets calibrants, en particulier leur localisation et leurs caractéristiques géométriques (par exemple leur rayon r pour des billes sphériques). Ensuite, pour chacune des autres longueurs d'onde, on effectue à nouveau les étapes 25 à 26, à ceci près que (i) les paramètres de localisation et géométriques ne sont plus ajustables, et sont fixés comme égaux à ceux obtenus avec $\lambda_{ref}$, (ii) les coefficients de Zernike $\alpha_1^{-1}$ et $\alpha_1^1$ sont maintenant des paramètres ajustables, non nécessairement nuls. On rend ainsi compte du fait que (i) les objets calibrants sont supposés immobiles et inchangés géométriquement entre deux longueurs d'ondes, et que (ii) le système ayant des aberrations chromatiques, leur image peut être translatée entre une longueur d'onde et une autre. On caractérise ainsi les aberrations chromatiques du système. On peut effectuer ensuite l'étape 27 indépendamment pour toutes les longueurs d'ondes, ou selon une autre méthode telle celle décrite ci-dessus. Notons enfin qu'il est possible, par une variante du procédé, de fixer davantage qu'une longueur d'onde comme référence, ce qui peut permettre d'ajuster plus précisément la localisation et les paramètres géométriques des objets calibrants (par exemple par le truchement d'une moyenne entre les paramètres obtenus aux différentes longueurs d'onde de référence).

2. On s'attend à ce que la localisation des objets dans le plan de transmittance, une fois les aberrations chromatiques corrigées (par exemple indépendamment pour chaque longueur d'onde, ou selon le procédé décrit en 1.) soit invariante entre les différentes longueurs d'onde. On peut avantageusement traduire cela dans les différents problèmes selon les relations (10)-(13) en définissant un terme de régularisation $\mu R^{NP}(\underline{t}(x, y, z))$ partagé entre les différentes longueurs d'ondes, de manière à imposer une localisation identique des objets dans le plan de transmittance pour toutes les longueurs d'onde utilisées. On obtient ainsi une correction plus précise des aberrations. Avantageusement, le terme de régularisation commun aux différentes corrections est un terme promouvant la co-localisation des bords des fonctions de transmittance aux multi-longueur d'onde selon la relation :

$$R^{NP} = \sum_{x,y} \sqrt{\sum_{\lambda \epsilon \Lambda} \nabla_{x,y} \Re\left(\underline{t}^t_\lambda(x,y)\right)^2 + \nabla_{x,y} \Im\left(\underline{t}^t_\lambda(x,y)\right)^2 + \varepsilon^2} \qquad (14)$$

relation dans laquelle :

- A est l'ensemble des longueurs d'onde utilisées ;
- x et y sont les coordonnées des pixels dans les fonctions de transmittance ;
- $\nabla_{x,y}$ est le symbole du gradient ;
- $\Re$ est la partie réelle d'une fonction ;
- $\Im$ est la partie imaginaire d'une fonction ;
- $\varepsilon$ est un scalaire positif de faible valeur ayant pour objectif de rendre la relation (14) différentiable et éviter une division par zéro dans le calcul de la dérivée du gradient.

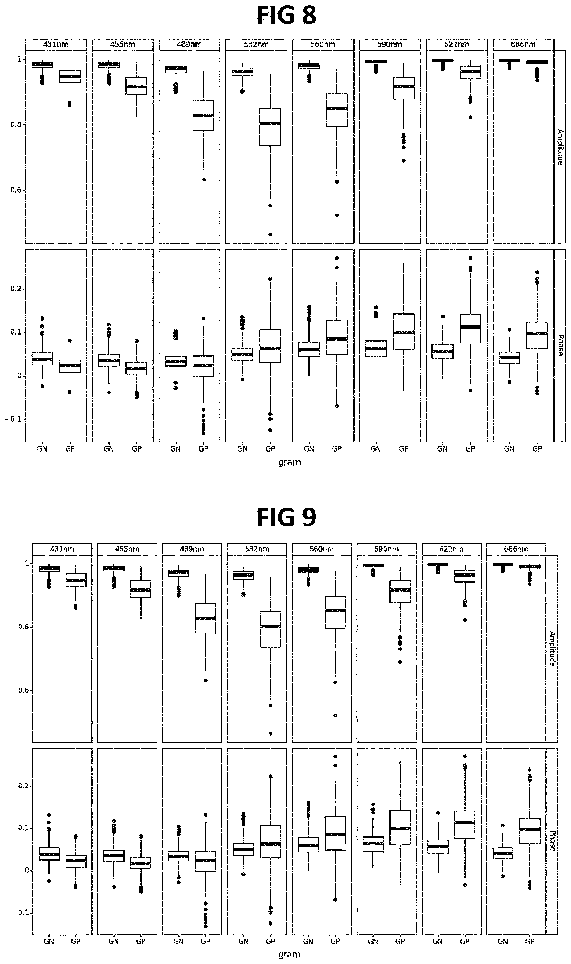

La figure 7 illustre l'absorbance et la phase moyennées sur les pixels de bactéries comprises dans des images refocalisées à différentes longueurs d'onde sans correction ou avec la correction avec le terme de régularisation selon le point 2 ci-dessus. En particulier deux courbes sont représentées, une correspondant à un bacille Gram- et l'autre correspondant à un coque Gram+. Comme on peut le constater, la correction des aberrations a pour effet de séparer de manière plus franche les courbes d'absorbance et de séparer les courbes de phase, sinon confondues, sur une partie au moins de la gamme de longueurs d'onde. De même, la figure 8 montre qu'à certaines longueurs d'ondes, il n'y a pas de recouvrement entre les interquartiles des distributions d'amplitudes et de phases moyennes par bactérie.

Un modèle statistique (ou algorithme) de prédiction du type de Gram de bactéries, par exemple de type LDA (de l'anglais Linear Discriminant Analysis), a été entraîné sur des images de lames de Gram acquises et refocalisées avec correction des aberrations pour 8 longueurs d'onde (431nm, 455nm, 489nm, 532nm, 560nm, 590nm, 622nm, et 666nm). Ce type d'algorithme est bien connu et par exemple décrit à l'URL https://scikit-learn.org/stable/modules/1da_qda.html#lda-qda.

En particulier, trois variantes de l'algorithme LDA ont été entraînées:

1. une première avec la totalité des 16 canaux (8 pour l'absorbance, 8 pour la phase) utilisé comme prédicteurs pour l'algorithme.
2. une second avec uniquement les 8 canaux d'absorbance utilisés comme prédicteurs pour l'algorithme.
3. un troisième uniquement avec les 8 canaux de phase utilisés comme prédicteurs pour l'algorithme.

Plusieurs images de lame de Gram aux différentes longueurs d'onde ont été acquises et les pixels des images refocalisées et corrigées correspondant aux bactéries ont été extraits. L'absorbance et la phase a été moyennée pour chaque bactérie sur l'ensemble des pixels correspondants. Au total l'absorbance et la phase moyennées de 539 bactéries de Gram + ("GP") et de Gram-("GN"), couvrant initialement 50535 pixels, ont été acquises. Les figures 8 et 9 illustrent les distributions des amplitudes et des phases moyennées, par des boites de Tukey , respectivement avec correction des aberrations et sans correction des aberrations.

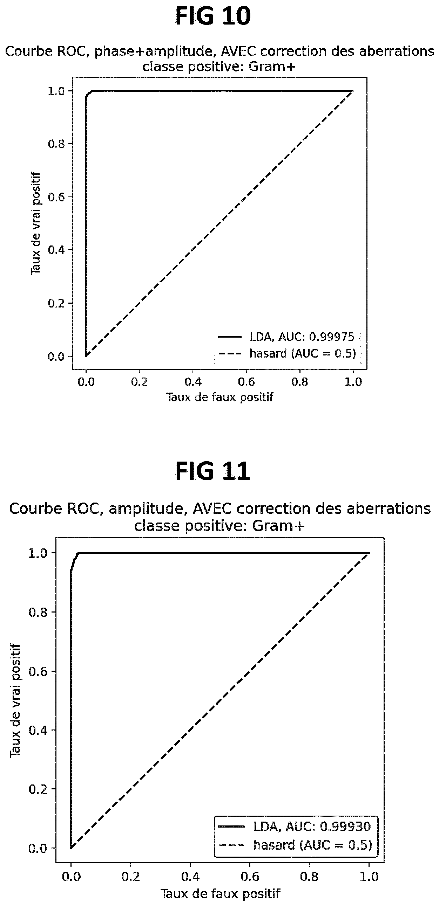

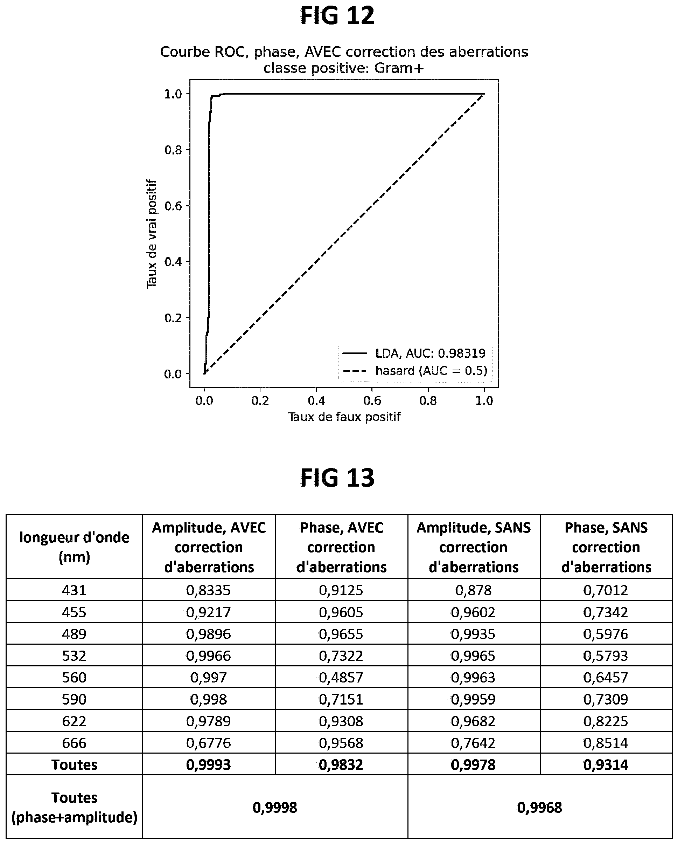

L'algorithme de LDA a été entraîné en séparant l'ensemble des 539 couples absorbance/phase en 5 sous-échantillons (« folds »). Chacun des 5 sous-échantillons est utilisé sert tour à tour comme jeu de test pour évaluer les performances d'un modèle LDA entraîné sur l'ensemble des 4 autres sous-échantillons. On peut construire ainsi une mesure de performance agrégée, comme par exemple une courbe ROC («receiver operating characteristic ») et son aire sous la courbe (AUC). Notons que le modèle statistique LDA ne nécessite pas d'optimisation d'hyperparamètre, aussi aucune optimisation par validation croisée n'a été ici nécessaire.. Les figures 10, 11 et 12 illustrent la courbe ROC des modèles prédictifs s ainsi obtenu, à savoir un modèle prédictif sur les 16 canaux (figure 10), un modèle prédictif pour les 8 canaux d'absorbance (figure 11) et un modèle prédictif pour les 8 canaux de phase (figure 12). Comme on peut le constater, la surface sur la courbe ROC est proche de 1 pour chacun d'entre eux, démontrant qu'il est possible de prédire le Gram d'une bactérie après correction des aberrations, en fonction de la totalité des canaux ou en fonction uniquement de ceux d'absorbance ou en fonction uniquement de ceux de phase. La figure 13 résume les AUC obtenues avec ou sans aberrations, avec tous les canaux, les canaux d'amplitude seuls, de phase seuls à toutes les longueurs d'ondes, ou enfin les canaux d'amplitude ou de phase en se restreignant à une seule longueur d'onde.

Plus particulièrement, il est possible de prédire le Gram à l'aide d'une, ou préférentiellement au moins deux, longueurs d'onde dans la gamme 420nm-670nm, notamment dans la gamme 450-630nm, et encore plus particulièrement dans la gamme 530-590nm, en utilisant l'amplitude seule ou en combinaison avec la phase. En se basant sur la phase, une prédiction de Gram n'est possible avec des performances satisfaisantes qu'avec correction des aberrations, avec des longueurs d'onde dans la gamme (disjointe) [420-490nm] et/ou [620-670nm], plus particulièrement [455-490nm] et vers 665nm.

On remarquera (figure 13) que même avec une seule longueur d'onde et un seul canal de phase ou d'amplitude, la prédiction entre les types de gram reste possible, avec des AUC supérieures à 0.95. Par ailleurs, on remarquera également (figures 8 et 9) que, uniquement dans le cas de la correction des aberrations, dans la gamme 530-590nm, et plus particulièrement aux alentours à 560nm, l'amplitude mesurée est très différente entre les Gram+ et les Gram- (ce qui induit une AUC élevée pour le classifieur LDA, cf fig 13), mais qu'en revanche la phase est peu différente entre les deux types de Gram et présente une distribution resserrée. Ainsi, dans ce cas particulier, il est possible de n'exploiter qu'une longueur d'onde et tirer parti du canal d'amplitude, variable, pour discriminer entre types de gram, et du canal de phase, stable, à des fins de calibration.

## EXTENSION DE L'ENSEIGNEMENT DU MODE DE REALISATION DETAILLE

Il a été décrit un mode de réalisation de l'invention appliqué à la détermination du GRAM de microorganisme. L'invention s'applique à tout type de caractérisation de microorganismes utilisant une holographie numérique en ligne, par exemple la détermination de la sensibilité de microorganismes à un agent antimicrobien tel que décrit dans la demande WO2017207184.

Plus généralement, l'invention s'applique à tout type de caractérisation, quelle que soit la nature de l'échantillon, biologique ou non, dès lors que l'on souhaite corriger les aberrations impactant la formation de figures d'interférence acquise par un système DHM.

Il a été décrit l'utilisation de billes pour la calibration. Tout type d'objet pouvant faire l'objet d'une reconstruction paramétrique par approche inverse peut convenir : cylindre, ellipsoïde, ... Il a été décrit un microscope à immersion directe, sans lamelle, et sans bague de correction. Un échantillon recouvert d'une lamelle de microscope avec un microscope muni d'un collier de correction de l'épaisseur de ladite lamelle convient.

Il a été décrit une prédiction basée sur des absorbances et/ou des phases moyennées sur les pixels de bactérie. En variante, la prédiction su Gram d'une bactérie est réalisée pour chaque pixel de celle-ci et un vote à la majorité des pixels est mis en oeuvre.

Un algorithme de prédiction de type LDA a été décrit. Evidemment d'autres types d'algorithme de prédiction sont possibles, par exemple une QDA( "quadratic discriminant analysis"), une SVM ("support vector machine", à noyau linéaire ou non)...

## Revendications

**1.** Procédé de caractérisation de microorganismes présents dans un échantillon biologique, comprenant:

A. pour chaque longueur d'onde d'un ensemble prédéterminé de longueurs d'onde d'au moins une longueur d'onde:

- l'acquisition d'une image numérique holographique de l'échantillon au moyen d'un dispositif d'acquisition en imagerie microscopique défocalisée avec une source de lumière cohérente ou partiellement cohérente, ledit dispositif étant configuré pour former sur un capteur d'image matriciel des figures d'interférence entre la source de lumière et la lumière diffractées par l'échantillon ;
- la génération informatique d'une image focalisée par l'application, à l'image numérique holographique, d'un modèle numérique de reconstruction d'une image focalisée, ladite image focalisée comprenant un ensemble de pixels, chaque pixel comprenant une valeur d'amplitude et une valeur de phase;
- la segmentation informatique de l'image focalisée de manière à extraire des portions de l'image focalisée correspondant à des microorganismes présents dans l'échantillon;

B. la caractérisation informatique des microorganismes en fonction desdites portions d'images focalisées,

*caractérisé* en ce que:

A.1. préalablement à la caractérisation ou préalablement à la segmentation ou préalablement à la génération de l'image focalisée, le procédé comporte la correction informatique d'aberrations optiques du dispositif d'acquisition;

B.1. la caractérisation informatique des microorganismes comporte l'application d'un modèle numérique auxdites portions d'image focalisée ayant pour descripteurs les valeurs d'amplitude et/ou de phase de chaque longueur d'onde de l'ensemble prédéterminé de longueurs d'onde.

2. Procédé de selon la revendication 1, *caractérisé* **en ce qu'**une longueur d'onde seulement est utilisée, ladite longueur d'onde étant comprise dans la gamme 530-590nm, et plus particulièrement 550-570nm

3. Procédé selon l'une quelconque des revendication précédente, *caractérisé* **en ce que** l'ensemble prédéterminé de longueurs d'onde comprend au moins deux longueurs d'onde.

4. Procédé selon la revendication 3, *caractérisé* **en ce que** les aux moins deux longueurs d'onde sont comprises dans la gamme 420-670nm.

5. Procédé selon la revendication 4, *caractérisé* **en ce que** l'échantillon consiste en une coloration de GRAM étalée sur une lame de microscope et **en ce que** les aux moins deux longueurs d'onde sont comprises dans la gamme 450-630nm, et plus particulièrement dans la gamme 530-590nm.

6. Procédé selon la revendication 3, **caractérisé en ce que** les aux moins deux longueurs d'onde comprennent les longueurs d'onde 590nm et 622nm.

7. Procédé selon l'une des revendications 3 à 6, *caractérisé* **en ce que** l'échantillon consiste en une coloration de GRAM étalée sur une lame de microscope et **en ce que** l'une au moins des deux longueurs d'onde soit comprises dans la gamme 420-490nm ou 620-670nm, plus particulièrement 455-490nm ou 660-670nm.

8. Procédé selon l'une des revendications précédentes, *caractérisé* **en ce que**:

- l'acquisition de l'image numérique holographique comporte la fourniture, dans le champ de vision du dispositif d'acquisition correspondant à ladite image, d'une pluralité d'objets de calibration distincts des microorganismes présents dans l'échantillon biologique, lesdits objets

   ○ étant préalablement caractérisés en dimension et en indice de réfraction ;
   ○ ayant des dimensions choisies de manière à produire des figures d'interférence sur le capteur d'image matriciel ;
   ○ ayant une forme choisie de sorte que lesdites figures d'interférence sont calculables en utilisant un modèle de propagation de front d'onde intégrant des aberrations optiques du dispositif d'acquisition ;

- préalablement à la génération informatique de l'image focalisée, le procédé comporte :

   ○ l'identification dans l'image numérique holographique des objets de calibration ;
   ○ le calcul des figures d'interférence des objets de calibration par l'application du modèle de propagation de front d'onde;
   ○ la quantification des aberrations optiques du dispositif d'acquisition en fonction des figures d'interférence des objets de calibration dans l'image holographique et les figures d'interférence calculées ;

- le modèle numérique de reconstruction de l'image focalisée intègre les aberrations optiques quantifiées.

9. Procédé selon l'une quelconque des revendications précédentes, *caractérisé* **en ce que** un modèle d'aberrations optiques est calculé pour chaque longueur d'onde de la pluralité de longueurs d'onde en imposant une contrainte sur les paramètres de localisation et/ou géométriques des objets de calibration.

10. Procédé selon la revendication 9, *caractérisé* **en ce qu'**un modèle de reconstruction de l'image numérique intégrant les aberrations chromatiques est calculé pour chaque longueur d'onde de la pluralité de longueurs d'onde en imposant une contrainte sur les paramètres de localisation des objets, commune à l'ensemble de la pluralité de longueurs d'onde.

11. Système de caractérisation de microorganismes présents dans un échantillon biologique, comprenant:

- un dispositif d'acquisition d'une image numérique holographique de l'échantillon au moyen d'un dispositif d'acquisition en imagerie microscopique défocalisée avec une source de lumière cohérente ou partiellement cohérente, ledit dispositif étant configuré pour former sur un capteur d'image matriciel des figures d'interférence entre la source de lumière et la lumière diffractées par l'échantillon, ledit dispositif étant apte à acquérir une image numérique holographique de l'échantillon pour chaque longueur d'onde d'un ensemble prédéterminé de longueurs d'onde d'au moins une longueur d'onde ;
- une unité informatique configurée pour mettre en oeuvre:

○ la génération informatique d'une image focalisée par l'application, à l'image numérique holographique, d'un modèle numérique de reconstruction d'une image focalisée, ladite image focalisée comprenant un ensemble de pixels, chaque pixel comprenant une valeur d'amplitude et une valeur de phase;
○ la segmentation informatique de l'image focalisée de manière extraire des portions de l'image focalisée correspondant à des microorganismes présent dans l'échantillon;
○ la caractérisation informatique des microorganismes en fonction desdites portions d'images focalisées,

*caractérisé* **en ce que** l'unité informatique est en outre configurée pour mettre en oeuvre:

- préalablement à la caractérisation ou préalablement à la segmentation ou préalablement à la génération de l'image focalisée, la correction informatique d'aberrations optiques du dispositif d'acquisition;
- pour la caractérisation informatique des microorganismes, l'application d'un modèle numérique auxdites portions d'image focalisée ayant pour descripteurs les valeurs d'amplitude et de phase de chaque longueur d'onde de l'ensemble prédéterminé de longueurs d'onde.

12. Système selon la revendication 9, configuré pour mettre en oeuvre un procédé selon l'une quelconque des revendications 2 à 10.

13. Produit programme d'ordinateur comprenant une mémoire informatique mémorisant des instructions lisibles par ordinateur pour la mise en oeuvre d'un procédé selon l'une quelconque des revendications 1 à 10.

# FIG 1

# FIG 2

20 → Prélèvement d'un échantillon suspecté de contenir des bactéries

↓

21 → Ajout de billes calibrées dans l'échantillon

↓

22 → Réalisation d'une lame de Gram

↓

23 → Acquisition d'une image d'intensité des figures d'interférence de l'échantillon au moyen du système DHM

↓

24 → Partition de l'image en patchs

↓

25 → Pour chaque patch, détection des billes par une approche de problème inverse paramétrique

↓

26 → Pour chaque patch, calcul des aberrations géométriques du système d'acquisition DHM

↓

27 → Reconstruction de l'image focalisée intégrant les aberrations géométriques

↓

28 → Détermination du Gram en fonction de l'image focalisée reconstruite

**FIG 3**

## FIG 4

(a)

(b)

(c)

(d)

# FIG 5

(a)

(b)

(c)

(d)

# FIG 6

(a)                                                            (b)

# FIG 7

(a): sans correction                    (b) avec correction

## FIG 8

## FIG 9

# FIG 10

Courbe ROC, phase+amplitude, AVEC correction des aberrations
classe positive: Gram+

— LDA, AUC: 0.99975
--- hasard (AUC = 0.5)

# FIG 11

Courbe ROC, amplitude, AVEC correction des aberrations
classe positive: Gram+

— LDA, AUC: 0.99930
--- hasard (AUC = 0.5)

# FIG 12

**Courbe ROC, phase, AVEC correction des aberrations classe positive: Gram+**

# FIG 13

| longueur d'onde (nm) | Amplitude, AVEC correction d'aberrations | Phase, AVEC correction d'aberrations | Amplitude, SANS correction d'aberrations | Phase, SANS correction d'aberrations |
|---|---|---|---|---|
| 431 | 0,8335 | 0,9125 | 0,878 | 0,7012 |
| 455 | 0,9217 | 0,9605 | 0,9602 | 0,7342 |
| 489 | 0,9896 | 0,9655 | 0,9935 | 0,5976 |
| 532 | 0,9966 | 0,7322 | 0,9965 | 0,5793 |
| 560 | 0,997 | 0,4857 | 0,9963 | 0,6457 |
| 590 | 0,998 | 0,7151 | 0,9959 | 0,7309 |
| 622 | 0,9789 | 0,9308 | 0,9682 | 0,8225 |
| 666 | 0,6776 | 0,9568 | 0,7642 | 0,8514 |
| **Toutes** | **0,9993** | **0,9832** | **0,9978** | **0,9314** |
| **Toutes (phase+amplitude)** | **0,9998** | | **0,9968** | |

EP 4 502 732 A1

Europäisches
Patentamt

European
Patent Office

Office européen
des brevets

## RAPPORT DE RECHERCHE EUROPEENNE

Numéro de la demande

**EP 23 18 9164**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | FR 3 111 998 A1 (BIOMERIEUX SA [FR]; UNIV JEAN MONNET SAINT ETIENNE [FR] ET AL.) 31 décembre 2021 (2021-12-31) * abrégé * * figures 1,2 * * alinéa [0012] – alinéa [0020] * ----- | 1-13 | INV. G03H1/00 G03H1/04 G03H1/26 G01N15/1433 G01N15/1434 G01N15/10 |
| Y | US 2023/044632 A1 (COENE WILLEM MARIE JULIA MARCEL [NL] ET AL) 9 février 2023 (2023-02-09) * abrégé * * alinéa [0107] * ----- | 1-13 | G03H1/08 ADD. G06T7/00 G06V10/143 G06V10/22 G06V10/24 G06V10/26 G06V10/44 C12Q1/04 |

**DOMAINES TECHNIQUES RECHERCHES (IPC)**

G03H
G01N

Le présent rapport a été établi pour toutes les revendications

| Lieu de la recherche | Date d'achèvement de la recherche | Examinateur |
|---|---|---|
| Munich | 1 février 2024 | Sittler, Gilles |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

2

**EP 4 502 732 A1**

## ANNEXE AU RAPPORT DE RECHERCHE EUROPEENNE
## RELATIF A LA DEMANDE DE BREVET EUROPEEN NO.

EP 23 18 9164

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-02-2024

| Document brevet cité au rapport de recherche | | Date de publication | Membre(s) de la famille de brevet(s) | | Date de publication |
|---|---|---|---|---|---|
| FR 3111998 | A1 | 31-12-2021 | CN | 116097177 A | 09-05-2023 |
| | | | EP | 4172699 A1 | 03-05-2023 |
| | | | FR | 3111998 A1 | 31-12-2021 |
| | | | JP | 2023531715 A | 25-07-2023 |
| | | | US | 2023236542 A1 | 27-07-2023 |
| | | | WO | 2021260321 A1 | 30-12-2021 |
| US 2023044632 | A1 | 09-02-2023 | CN | 114830043 A | 29-07-2022 |
| | | | IL | 293746 A | 01-08-2022 |
| | | | JP | 2023506946 A | 20-02-2023 |
| | | | KR | 20220101695 A | 19-07-2022 |
| | | | TW | 202129430 A | 01-08-2021 |
| | | | US | 2023044632 A1 | 09-02-2023 |
| | | | WO | 2021121733 A1 | 24-06-2021 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 3252455 A
- FR 3111998
- WO 2017207184 A

### Littérature non-brevet citée dans la description

- **MYUNG K.KIM**. Principles and techniques of digital holographie microscopy. *SPIE Reviews*, January 2010, vol. 1 (1)
- **N. WU et al.** Three-dimensional identification of microorganisms using a digital holographie microscope. *Computational and Mathematical Methods in Medicine*, vol. 2013
- **DE AHMED EL MALLAHI**. Automated threedimensional détection and classification of living organisms using digital holography microscopy with partial spatial cohérent source: application to monitoring of drinkingwater resources. *Applied Optics*, January 2013, vol. 52 (1)
- **SOULEZ, F.** ; **DENIS, L.** ; **FOURNIER, C.** ; **THIÉBAUT, É.** ; **GOEPFERT, C.** Inverse-problem approach for particle digital holography: accurate location based on local optimization. *JOSA A*, 2007, vol. 24, 1164-1171
- **DE SOULEZ, F.** ; **DENIS, L.** ; **THIÉBAUT, É.** ; **FOURNIER, C.** ; **GOEPFERT, C.** Inverse problem approach in particle digital holography: out-of-field particle détection made possible. *JOSA A*, 2007, vol. 24, 3708-3716
- **ZHENG, G.** ; **OU, X.** ; **HORSTMEYER, R.** ; **YANG, C.** Characterization of spatially varying aberrations for wide field-of-view microscopy. *Opt. Express*, 2013, vol. 21, 15131-15143
- **GOUESBET, G.** ; **MEES, L**. Generalized Lorenz-Mie theory for infinitely long elliptical cylinders.. *JOSA A*, 1999, vol. 16, 1333-1341
- **SLIMANI, FARID et al.** Near-field Lorenz-Mie theory and its application to microholography. *Applied Optics*, 1984
- **J. NOCEDAL** ; **S. WRIGHT**. Numerical optimization. Springer Science & Business Media, 2006
- **SOULEZ, F.** ; **DENIS, L.** ; **FOURNIER, C.** ; **THIÉBAUT, É.** ; **GOEPFERT, C.** Inverse-problem approach for particle digital holography: accurate location based on local optimization.. *JOSA A*, 2007, vol. 24, 1164-1171
- On fast trust région methods for quadritic models with linear constraints. **M.J.D. POWELL**. Report of the Department of Applied Mathematics and Theoretical Physics. Cambridge University, 2014
- **F. JOLIVET et al.** Regularized reconstruction of absorbing and phase object from a single in-line hologram, application to fluid mechanics and microbiology. *Opt. Express*, 2018, vol. 26